# EUROPÄISCHE PATENTSCHRIFT

(11) **EP 3 762 683 B1**
(45) Veröffentlichungstag und Bekanntmachung des Hinweises auf die Patenterteilung: **21.06.2023**
(21) Anmeldenummer: 19712912.5
(22) Anmeldetag: 11.03.2019
(51) Int. Cl.: G01B 11/24, G06T 7/586

(54) **VERFAHREN UND VORRICHTUNG ZUM ERMITTELN EINER HÖHENPROFILABBILDUNG EINER OBERFLÄCHE EINES OBJEKTS**
METHOD AND APPARATUS FOR ASCERTAINING A HEIGHT PROFILE IMAGE OF A SURFACE OF AN OBJECT
PROCÉDÉ ET DISPOSITIF SERVANT À DÉTERMINER UNE REPRODUCTION DE PROFIL DE HAUTEUR D'UNE SURFACE D'UN OBJET

(30) Priorität: 09.03.2018 DE 102018105516
(43) Veröffentlichungstag der Anmeldung: 13.01.2021
(73) Patentinhaber: Cruse Spezialmaschinen GmbH, 53343 Wachtberg-Villip (DE)
(72) Erfinder: BECKER, Jens, 53359 Rheinbach (DE)
(74) Vertreter: Habermann Intellectual Property Partnerschaft von Patentanwälten mbB
(86) Internationale Anmeldenummer: PCT/EP2019/055971
(87) Internationale Veröffentlichungsnummer: WO 2019/170906

(56) Entgegenhaltungen:
- DE-A1-102015 203 396
- US-A1- 2008 123 937
- LEE S ET AL: "Integrating stereo and photometric stereo to monitor the development of glaucoma", IMAGE AND VISION COMPUTING, ELSEVIER, GUILDFORD, GB, Bd. 9, Nr. 1, 1. Februar 1991 (1991-02-01) , Seiten 39-44, XP026655982, ISSN: 0262-8856, DOI: 10.1016/0262-8856(91)90047-S [gefunden am 1991-02-01]
- LI XU ET AL: "Combining encoded structured light and photometric stereo for underwater 3D reconstruction", 2017 IEEE SMARTWORLD, UBIQUITOUS INTELLIGENCE & COMPUTING, ADVANCED & TRUSTED COMPUTED, SCALABLE COMPUTING & COMMUNICATIONS, CLOUD & BIG DATA COMPUTING, INTERNET OF PEOPLE AND SMART CITY INNOVATION (SMARTWORLD/SCALCOM/UIC/ATC/CBDCOM/IOP/SCI ), IEEE, 4. August 2017 (2017-08-04), Seiten 1-6, XP033365880, DOI: 10.1109/UIC-ATC.2017.8397465 [gefunden am 2018-06-26]
- DORIS ANTENSTEINER ET AL: "A Review of Depth and Normal Fusion Algorithms", SENSORS, Bd. 18, Nr. 2, 1. Februar 2018 (2018-02-01), Seite 431, XP055592993, DOI: 10.3390/s18020431

## Beschreibung

Die Erfindung betrifft ein Verfahren zum Ermitteln einer Höhenprofilabbildung einer Oberfläche eines Objekts, welches auf einem Aufnahmetisch angeordnet ist. Die Erfindung betrifft auch eine Vorrichtung zum Ermitteln einer Höhenprofilabbildung einer Oberfläche eines Objekts mit einem Aufnahmetisch, mit welchem das Objekt aufgelegt werden kann, mit einer optischen Erfassungseinrichtung zur Aufnahme von Abbildungen von der Oberfläche des Objekts, und mit einer Beleuchtungseinrichtung, mit welcher die Oberfläche des Objekts aus unterschiedlichen Beleuchtungsrichtungen relativ zu einer Lotrechten beleuchtet werden kann, die senkrecht auf einer Oberfläche des Aufnahmetischs aufsteht.

In vielen verschiedenen Anwendungsbereichen wird eine möglichst wirklichkeitsgetreue digitale Erfassung von großen Oberflächen angestrebt, um die Oberflächen von verschiedenen Objekten möglichst realistisch und naturgetreu nachbilden zu können. Dabei werden eine möglichst hochauflösende Abbildung mit einem möglichst präzisen Höhenprofil und einer guten Farbwiedergabe als besonders wichtig für die Qualität der digital erfassten Oberflächenmodelle angesehen.

Aus der Praxis sind verschiedene Verfahren bekannt, mit denen ein digitales Oberflächenmodell bzw. eine Höhenprofilabbildung einer Oberfläche eines Objekts erzeugt werden kann. Die Höhenprofilabbildung enthält möglichst detailgetreue Oberflächenstrukturinformationen, bzw. Höheninformationen für eine dreidimensional strukturierte Oberfläche. Zudem kann die Höhenprofilabbildung auch eine möglichst farbengetreue Wiedergabe der Oberfläche des Objekts beinhalten.

So kann beispielsweise im Rahmen einer fotometrischen Stereoanalyse ausgehend von mehreren verschiedenen fotometrischen Abbildungen der Oberfläche eines Objekts für eine große Anzahl von Objektstellen jeweils eine Flächennormale eines dieser Objektstelle zugeordneten Oberflächenbereichs bestimmt werden und auf die Orientierung des betreffenden Oberflächenbereichs geschlossen werden. Zu diesem Zweck werden möglicherweise mehrere verschiedene fotometrische Abbildungen der Oberfläche bei unterschiedlichen Beleuchtungssituationen des Objekts aufgenommen und ausgewertet. Aus den einzelnen Flächennormalen der Oberflächenbereiche kann dann beispielsweise durch Integration entlang einer oder mehrerer Linien über das Objekt oder durch das Lösen eines entsprechenden Gleichungssystems einer Höhenprofilabbildung ermittelt werden. Ein derartiges Verfahren wird in der Praxis auch als fotometrische Stereoanalyse bezeichnet und stellt eine Weiterentwicklung des Shape from Shading-Verfahrens dar. Es hat sich jedoch gezeigt, dass die Ermittlung eines Höhenprofils auf der Grundlage der abgeschätzten Flächennormalen oftmals fehlerbehaftet ist, da die mit den Flächennormalen charakterisierte Ausrichtung eines Oberflächenbereichs einer Objektstelle keine Höheninformationen enthält und bei der Erstellung eines Höhenprofils aus einer großen Anzahl von jeweils abgeschätzten Flächennormalen sich die einzelnen Fehler aufsummieren und erhebliche Abweichungen von dem tatsächlichen Höhenprofil ergeben können.

Es ist ebenfalls aus der Praxis bekannt, durch eine Überlagerung von mehreren Abbildungen der Oberfläche des Objekts, die aus unterschiedlichen Blickwinkeln relativ zu der Lotrechten aufgenommen wurden und einem dabei ermittelten Versatz von Abbildungspunkten, die derselben punktförmigen Objektstelle zugeordnet werden, einen Tiefenwert für die betreffende Objektstelle zu ermitteln, um mit Hilfe der Tiefenwerte eine Höhenprofilabbildung zu erstellen. Es hat sich jedoch gezeigt, dass insbesondere bei abrupten, bzw. sprunghaften Änderungen in dem Höhenprofil die auf diese Weise ermittelten Tiefenwerte fehlerbehaftet sind und beispielsweise unmittelbar benachbarte Tiefenwerte ganz erheblich voneinander abweichen, während das Höhenprofil einen kontinuierlichen Übergang aufweist.

Weiterhin ist aus der Praxis beispielsweise bekannt, auf das Objekt eine Sequenz von Lichtmustern zu projizieren, wobei jedes Lichtmuster üblicherweise aus mehreren parallel verlaufenden Leuchtstreifen besteht. Auf der Oberfläche des Objekts weisen die einzelnen Leuchtstreifen jedoch eine entsprechend der Oberflächenstruktur des Objekts verlaufende Krümmung auf. Diese gekrümmten Lichtmuster können erfasst und aus der Krümmung der einzelnen Leuchtstreifen einer Höhenprofilabbildung erzeugt werden. Streifenlichtscanner, mit denen ein derartiges Verfahren durchgeführt werden kann, werden in vielen Anwendungsbereichen eingesetzt. Die mit derartigen Streifenlichtscannern erreichbare Genauigkeit ist jedoch mit einem erheblichen konstruktiven Aufwand verbunden und insgesamt beschränkt.

Es hat sich gezeigt, dass die einzelnen Verfahren jeweils für verschiedene Anwendungsfälle vorteilhaft sein können, jedoch üblicherweise mit Einschränkungen verbunden sind. So ist keines der aus dem Stand der Technik bekannten Verfahren dafür geeignet, eine großformatige Oberfläche eines Objekts mit einer Fläche von beispielsweise einem Quadratmeter oder mehr mit einer Auflösung von weniger als einem Millimeter vorzugsweise weniger als 0,1 Millimeter zu erfassen und eine möglichst realistische Höhenprofilabbildung in vergleichsweise kurzer Zeit zu erzeugen.

Es wird deshalb als eine Aufgabe der vorliegenden Erfindung angesehen, ein aus der Praxis bereits bekanntes Verfahren zum Ermitteln einer Höhenprofilabbildung so weiterzuentwickeln, dass mit möglichst geringem Aufwand eine möglichst genaue Höhenprofilabbildung einer Objektfläche eines Objekts erzeugt werden kann, wobei die Objektfläche möglichst groß sein sollte und beispielsweise 0,5 m² oder 1 m² oder mehr betragen sollte.

Diese Aufgabe wird erfindungsgemäß durch ein Verfahren gemäß Anspruch 1 gelöst, wobei in einem Tiefenwertermittlungsschritt jeweils ein Tiefenwert zu punktförmigen Objektstellen des Objekts als Abstandswert zu einer Bildebene ermittelt wird, die senkrecht zu der Lotrechten ausgerichtet ist, und wobei in einem fotometrischen Stereoanalyseschritt ausgehend von mehreren verschiedenen fotometrischen Abbildungen der Objektfläche des Objekts, die bei Beleuchtung des Objekts mit der Beleuchtungseinrichtung aus jeweils unterschiedlichen Beleuchtungsrichtungen durch die Erfassungseinrichtung aufgenommen wurden, mit Hilfe eines erweiterten fotometrischen Stereoanalyseverfahrens eine Höhenprofilabbildung der Oberfläche erzeugt wird, wobei in dem erweiterten Stereoanalyseverfahren die Nebenbedingung berücksichtigt ist, dass eine Differenz eines Höhenprofilabstands als Abstandswert des mit dem fotometrischen Stereoanalyseverfahrens ermittelten Höhenprofils zu der Bildebene an den Objektpunkten, für welche ein Tiefenwert vorgegeben wurde, minimiert ist.

In dem Tiefenwertermittlungsschritt werden zu punktförmigen Objektstellen des Objekts jeweils Tiefenwerte ermittelt. Die Tiefenwerte sind ein Maß für den Abstand der betreffenden punktförmigen Objektstelle des Objekts zu einer vorgegebenen Bildebene, beispielsweise die Oberfläche des Aufnahmetisches oder eine in der Nähe der Oberfläche des Objekts verlaufende Referenzebene. Die einzelnen Tiefenwerte können beispielsweise durch Grauwerte einer Grauwertskala repräsentiert und bei Bedarf visualisiert werden. Die einzelnen Tiefenwerte können mit einem beliebigen Verfahren ermittelt werden, das derartige Tiefenwerte zu der Oberfläche eins Objekts ermitteln kann.

In dem fotometrischen Stereoanalyseschritt wird eine modifizierte und erfindungsgemäß verbesserte Stereoanalyse durchgeführt. Dabei werden in bekannter Weise mehrere fotometrische Abbildungen der Oberfläche des Objekts in unterschiedlichen Beleuchtungssituationen aufgenommen.

Ausgehend von den einzelnen fotometrischen Abbildungen wird dann in dem erfindungsgemäß erweiterten Stereoanalyseverfahren eine Höhenprofilabbildung der Oberfläche erzeugt, wobei die vorab ermittelten Tiefenwerte zu punktförmigen Objektstellen des Objekts dahingehend berücksichtigt werden, dass der Abstand des mit dem erweiterten fotometrischen Stereoanalyseverfahrens erzeugten Höhenprofils zu dem betreffenden Tiefenwert an denjenigen Objektpunkten, für welche ein Tiefenwert vorgegeben wurde, möglichst gering ist.

Es handelt sich bei dem erfindungsgemäßen Verfahren um eine besonders vorteilhafte Kombination zweier verschiedener Verfahren, die jeweils für die Ermittlung einer Höhenprofilabbildung geeignet sind. Es hat sich gezeigt, dass bereits vergleichsweise ungenaue oder wenige Informationen zu den Tiefenwerten von punktförmigen Objektstellen des Objekts oftmals ausreichen, um die mit dem erweiterten fotometrischen Stereoanalyseverfahren erzeugte Höhenprofilabbildung der Oberfläche deutlich verbessern zu können. Der Aufwand für die Durchführung des Tiefenwertermittlungsschritts und des fotometrischen Stereoanalyseschritts kann jeweils reduziert, bzw. in vorteilhafter Weise an die gewünschte Genauigkeit der Höhenprofilabbildung angepasst werden. Der insgesamt für die Durchführung des erfindungsgemäßen Verfahrens anfallende Aufwand ist regelmäßig deutlich geringer als der für die Durchführung von zwei verschiedenen Verfahren erforderliche Aufwand.

Einer vorteilhaften Ausgestaltung des Erfindungsgedankens zu Folge ist vorgesehen, dass in einem Objektstellenauswahlschritt einzelne Objektstellen vorgegeben werden, für welche in dem nachfolgenden Tiefenwertermittlungsschritt jeweils ein Tiefenwert ermittelt wird. Die Auswahl der einzelnen Objektstellen kann manuell durch einen Benutzer oder aber automatisiert durch eine computergestützte Auswertung einer vorangehend erzeugten Abbildung der Oberfläche des Objekts erfolgen. So können beispielsweise einzelne markante Objektstellen ausgewählt werden, deren Tiefenwert für die Höhenprofilabbildung als besonders wichtig oder im Hinblick für die angestrebte Genauigkeit der Höhenprofilabbildung als besonders vorteilhaft erachtet wird. Es hat sich gezeigt, dass bereits eine geringe Anzahl einzelner Objektstellen ausreicht, um anhand der zu diesen Objektstellen ermittelten Tiefenwerte die mit dem erweiterten fotometrischen Stereoanalyseverfahren erzeugte Höhenprofilabbildung deutlich zu verbessern. Der für die Ermittlung von einigen wenigen Tiefenwerte zu den vorab ausgewählten Objektstellen anfallende Aufwand ist vergleichsweise gering. Eine hochauflösende Ermittlung von Tiefenwerten zu allen punktförmigen Objektstellen des Objekts ist nicht erforderlich.

Es ist gemäß einer weiteren Ausgestaltung des Erfindungsgedankens möglich und für verschiedene Anwendungsfälle vorteilhaft, dass in einem Tiefenwertkontrollschritt für die in dem Tiefenwertermittlungsschritt ermittelten Tiefenwerte eine Plausibilitätskontrolle durchgeführt wird und diejenigen Tiefenwerte verworfen werden, die ein vorgegebenes Plausibilitätskriterium nicht erfüllen. In einigen Anwendungsbereichen können beispielsweise Grenzwerte für die Tiefenwerte vorgegeben werden, wenn beispielsweise die Oberfläche des Objekts im Wesentlichen eben ist und lediglich eine geringe Oberflächenstruktur aufweist, wie es beispielsweise bei ebenen Holz- oder Lederoberflächen oder bei Gemälden der Fall sein kann. Es ist ebenfalls denkbar, dass jeweils für mehrere unmittelbar benachbarte punktförmige Objektstellen ein Tiefenwert ermittelt wird und deutlich voneinander abweichende Tiefenwerte für unmittelbar benachbarte Objektstellen verworfen werden. Selbstverständlich sind auch andere Plausibilitätskriterien denkbar, um Tiefenwerte zu verwerfen, die möglicherweise die nachfolgende erweiterte fotometrische Stereoanalyse beeinträchtigten und verfälschen könnten.

Im Hinblick auf einen besonders einfach und rasch durchführbaren Tiefenermittlungsschritt ist vorgesehen, dass in dem Tiefenermittlungsschritt mit der optischen Erfassungseinrichtung mehrere stereometrische Abbildungen der Oberfläche des Objekts unter verschiedenen Blickwinkeln relativ zu den Lotrechten aufgenommen und durch einen Vergleich der mehreren stereometrischen Abbildungen und ausgehend von einem dabei ermittelten Versatz von Abbildungspunkten, die derselben punktförmigen Objektstelle des Objekts zugeordnet werden, der Tiefenwert für die punktförmige Objektstelle ermittelt wird. Ein derartiges, in der Praxis auch als stereomatching bezeichnetes Verfahren kann mit einer geeigneten optischen Erfassungseinrichtung auch für großformatige Oberflächen von Objekten rasch und mit einer vergleichsweise hohen Auflösung durchgeführt werden. Dabei kann beispielsweise auch eine der stereometrischen Abbildungen für den gegebenenfalls vorausgehenden Objektstellenauswahlschritt verwendet werden. Für die Erzeugung von mehreren stereometrischen Abbildungen unter verschiedenen Blickwinkeln ist lediglich ein geringer konstruktiver Aufwand erforderlich. Bei großformatigen Oberflächen, bzw. Objekten kann eine einzelne stereometrische Abbildung auch aus einer Anzahl von Abbildungen einzelner Oberflächenbereiche des Objekts zusammengesetzt werden, um beispielsweise die stereometrische Abbildung mit einer besonders hohen Auflösung oder mit möglichst geringen Hardwareanforderungen aufnehmen zu können. Es hat sich gezeigt, dass bereits einige wenige stereometrische Abbildungen ausreichen, um die Tiefenwerte für die punktförmigen Objektstellen mit einer für viele Anwendungsfälle ausreichenden Genauigkeit ermitteln zu können.

Vorzugsweise ist optional vorgesehen, dass die Ermittlung der Tiefenwerte für die Objektstellen anhand von zwei stereometrischen Abbildungen durchgeführt wird, wobei eine erste stereometrische Abbildung mit einem Blickwinkel von 0 Grad und eine zweite stereometrische Abbildung mit einem Blickwinkel zwischen 10 Grad und 20 Grad relativ zu der Lotrechten aufgenommen wird. Die erste stereometrische Abbildung mit einem Blickwinkel von 0 Grad eignet sich auch für die Durchführung eines gegebenenfalls vorausgehenden Objektstellenauswahlschritts. Bereits mit einer einzigen weiteren Abbildung der zweiten stereometrischen Abbildung, die einen ausreichend großen Blickwinkelunterschied zu der ersten stereometrischen Abbildung aufweist, kann für die einzelnen Objektstellen jeweils ein Tiefenwert ermittelt werden, der für die üblichen Anwendungsfälle eine ausreichende Genauigkeit aufweist. Der für die Durchführung des Tiefenwertermittlungsschritts erforderliche Zeitaufwand ist demzufolge äußerst gering.

Weiterhin wird die optische Erfassungseinrichtung zur Veränderung des Blickwinkels für die Abbildungen relativ zu dem Objekt verschwenkt. Für den Tiefenermittlungsschritt ist demzufolge eine einzige optische Erfassungseinrichtung ausreichend. Das Verschwenken der optischen Erfassungseinrichtung kann mit geringem apparativem Aufwand mit großer Genauigkeit vorgegeben und durchgeführt werden.

Gemäß einer besonders vorteilhaften Ausgestaltung des erfindungsgemäßen Verfahrens ist vorgesehen, dass in dem fotometrischen Stereoanalyseschritt zwei verschiedene fotometrische Abbildungen aufgenommen werden, in dem eine Lichtablenkungseinrichtung die Lichtemission einer Leuchtquelle der Beleuchtungseinrichtung in zwei verschiedene Richtungen relativ zu dem Objekt richtet und für jede der beiden verschiedenen Richtungen der Lichtemission jeweils eine fotometrische Abbildung aufgenommen wird. Eine geeignete Lichtablenkungseinrichtung weist beispielsweise eine Anzahl von Spiegelflächen auf, die in mindestens zwei unterschiedliche Ausrichtungen verschwenkt werden können. Es ist ebenfalls denkbar, dass die Lichtablenkungseinrichtung zwei gegenüberliegende Öffnungen und dazwischen eine Anzahl von Spiegelflächen aufweist, die eine Lichtablenkung des durch eine Öffnung einfallenden Lichts bewirken. Die Lichtablenkungseinrichtung kann wahlweise mit der einen Öffnung oder mit der anderen Öffnung zu der Leuchtquelle hin angeordnet werden und bewirkt je nach Anordnung der Lichtablenkungseinrichtung eine Lichtablenkung in eine erste Richtung oder in eine zweite Richtung. Da eine derartige Lichtablenkungseinrichtung keine beweglichen Teile und insbesondere keine verschwenkbaren Spiegelflächen aufweisen muss, können mit geringem konstruktiven Aufwand zwei verschiedene Beleuchtungssituationen präzise vorgegeben werden.

Vorzugsweise ist gemäß einer vorteilhaften Ausgestaltung des Erfindungsgedankens vorgesehen, dass der Erfassungsbereich der optischen Erfassungseinrichtung auf einen vorzugsweise streifenförmigen Ausschnitt der Oberfläche des Objekts beschränkt ist und dass durch eine Verlagerung der optischen Erfassungseinrichtung und der Beleuchtungseinrichtung relativ zu der Oberfläche des Objekts die Oberfläche des Objekts vollständig abgescannt wird, wobei durch ein Zusammensetzen der einzelnen eingescannten Ausschnitte eine vollständige Abbildung der Oberfläche erzeugt wird. Die optische Erfassungseinrichtung kann beispielsweise eine Digitalkamera oder Scaneinrichtung aufweisen, deren einzelne Bildpunkte streifenförmig oder matrixförmig angeordnet sind. Indem der Erfassungsbereich der optischen Erfassungseinrichtung auf einen Teilbereich der Oberfläche des Objekts beschränkt wird, kann die räumliche Auflösung eines einzelnen Scans eines Teilausschnitts der Oberfläche im Vergleich zu der möglichen Auflösung einer vollständigen Gesamtaufnahme der Oberfläche deutlich verbessert werden. In vorteilhafter Weise ist vorgesehen, dass die optische Erfassungseinrichtung einen streifenförmigen Ausschnitt erfassen kann, der sich in einer Erfassungsrichtung über das gesamte Objekt hinweg erstreckt. Durch eine Verlagerung der optischen Erfassungseinrichtung oder des Objekts quer zu der Erfassungsrichtung kann mit einer einzigen Verlagerung des streifenförmigen Ausschnitts über das Objekt hinweg eine vollständige Abbildung der Oberfläche des Objekts erzeugt werden. In vielen Fälle ist es vorteilhaft, dass die optische Erfassungseinrichtung und die Beleuchtungseinrichtung für die Dauer eines Aufnahmevorgangs ortsfest an einem Rahmengestell angeordnet sind, während der Aufnahmetisch mit dem darauf befindlichen Objekt relativ zu der optischen Erfassungseinrichtung und der Beleuchtungseinrichtung verlagert wird. Es ist jedoch ebenfalls möglich, die optische Erfassungseinrichtung und die Beleuchtungseinrichtung relativ zu einem ortsfest angeordneten Aufnahmetisch zu verlagern, beispielsweise mit einem über den Aufnahmetisch hinweg verlagerbaren Portal.

Es hat sich gezeigt, dass eine möglichst gleichmäßige Beleuchtung des Objekts während der sukzessiven Aufnahme der mehreren Abbildungen, die für die Durchführung des erfindungsgemäßen Verfahrens erforderlich sind, von großem Vorteil sein kann. Aus diesem Grund ist es gemäß einer Ausgestaltung des Erfindungsgedankens vorgesehen, dass die Beleuchtungseinrichtung mehrere Leuchtmittel aufweist, für die während der Aufnahme der fotometrischen Abbildungen mit Hilfe einer Temperatursteuereinrichtung eine konstante Betriebstemperatur vorgegeben wird. Bei den Leuchtmitteln kann es sich jeweils um eine lichtemitierende Diode (LED) oder um eine Gruppe von LEDs handeln. Es ist ebenfalls denkbar, geeignete Leuchtstoffröhren oder andere Leuchtmittel zu verwenden. In vielen Fällen hängt die von dem betreffenden Leuchtmittel und insbesondere die von LEDs abgegebene spektrale Verteilung der Lichtemission erheblich von der jeweiligen Betriebstemperatur ab, die auch von der Umgebungstemperatur beeinflusst wird. Mit Hilfe der Temperatursteuereinrichtung wird erfindungsgemäß eine konstante Betriebstemperatur vorgegeben und dadurch eine möglichst gleichmäßige Beleuchtung des Objekts über die aufeinanderfolgenden Aufnahmen der mehreren Abbildungen hinweg bewirkt. Dies ist insbesondere für die erweiterte fotometrische Stereoanalyse der fotometrischen Abbildungen der Oberfläche des Objekts vorteilhaft, da die jeweils reflektierte Lichtintensität insbesondere bei mehrfarbigen Objekten sowohl von der Intensität als auch von der spektralen Emissionscharakteristik der auf das Objekt einfallenden Beleuchtung abhängt.

Die Erfindung betrifft auch eine Vorrichtung zum Ermitteln einer Höhenprofilabbildung einer Oberfläche eines Objekts gemäß Anspruch 8. Aus der Praxis sind verschiedene Vorrichtungen bekannt, mit denen die eingangsgeschilderten unterschiedlichen Verfahren zum Ermitteln einer Höhenprofilabbildung durchgeführt werden können. In vielen Fällen weisen derartige Vorrichtungen einen Aufnahmetisch auf, auf welchen das Objekt aufgelegt werden kann. Mit einer optischen Erfassungseinrichtung können Abbildungen von der Oberfläche des Objekts aufgenommen werden, dass sich auf dem Aufnahmetisch befindet. Die jeweils aus der Praxis bekannten Beleuchtungseinrichtungen sind an das jeweils durchgeführte Verfahren für die Ermittlung der Höhenprofilabbildung angepasst.

Mit den aus der Praxis bekannten verschiedenen Vorrichtungen lässt sich regelmäßig nur eines der verschiedenen Verfahren zum Ermitteln einer Höhenprofilabbildung sinnvoll durchführen, sodass sowohl die räumliche Auflösung und die Genauigkeit der Höhenprofilabbildung als auch die für die Durchführung des Verfahrens benötigte Verfahrensdauer für den jeweiligen Anwendungsfall akzeptabel sind. Es wird deshalb ebenfalls als eine Aufgabe der vorliegenden Erfindung angesehen, eine aus der Praxis bekannte Vorrichtung zum Ermitteln einer Oberfläche eines Objekts so auszugestalten, dass das vorangehend beschriebene Verfahren möglichst rasch und mit geringem Bedienaufwand durchgeführt werden kann.

Diese Aufgabe wird erfindungsgemäß dadurch gelöst, dass die Vorrichtung eine optische Erfassungseinrichtung zur Aufnahme von Abbildungen von der Oberfläche des Objekts und eine Beleuchtungseinrichtung, mit welcher die Oberfläche des Objekts aus unterschiedlichen Beleuchtungseinrichtungen relativ zu einer Lotrechten beleuchtet werden kann, die senkrecht auf einer Oberfläche des Aufnahmetischs aufsteht, und dass die Vorrichtung eine Auswerteeinrichtung aufweist, die zur Durchführung des vorangehend beschriebenen Verfahrens geeignet ist. Mit der erfindungsgemäßen Vorrichtung können sowohl ein Tiefenwertermittlungsschritt als auch nachfolgend ein fotometrischer Stereoanalyseschritt durchgeführt werden. Für den Tiefenwertermittlungsschritt können mit der optischen Erfassungseinrichtung mehrere stereometrische Abbildungen der Oberfläche des Objekts unter verschiedenen Blickwinkeln relativ zu der Lotrechten aufgenommen werden. Mit der Beleuchtungseinrichtung können verschiedene Beleuchtungssituationen erzeugt werden, um mit der optischen Erfassungseinrichtung verschiedene fotometrische Abbildungen der Oberfläche des Objekts bei unterschiedlichen Beleuchtungssituationen aufzunehmen. Die erfindungsgemäße Vorrichtung ist so ausgebildet, dass das erfindungsgemäße Verfahren nach dem Auflegen des Objekts auf den Aufnahmetisch durchgeführt werden kann, ohne dass manuelle Benutzereingriffe oder ein Entnehmen des Objekts und ein Neuanordnen des Objekts in einer anderen Vorrichtungskomponente erforderlich werden.

Erfindungsgemäß ist die optische Erfassungseinrichtung relativ zu dem Aufnahmetisch verschwenkbar angeordnet. Durch ein Verschwenken der optischen Erfassungseinrichtung kann die Oberfläche des auf dem Aufnahmetisch angeordneten Objekts unter verschiedenen Blickwinkeln erfasst werden. Es ist zudem vorgesehen, dass die optische Erfassungseinrichtung und der Aufnahmetisch relativ zueinander verlagert werden können. So kann das Objekt mit einem verfahrbaren Aufnahmetisch jeweils an den verschwenkten Erfassungsbereich der optischen Erfassungseinrichtung angepasst und in geeigneter Weise verlagert werden. Es ist ebenfalls vorteilhaft, dass ein großes Objekt mit Hilfe eines in einer Richtung oder in zwei Richtungen verfahrbaren Aufnahmetisches relativ zu der optischen Erfassungseinrichtung verlagert werden kann und beispielsweise unter einer optischen Erfassungseinrichtung hindurch verfahren werden kann, um aus einzelnen eingescannten Ausschnitten der Oberfläche eine vollständige Abbildung der Oberfläche zusammensetzen zu können.

In vorteilhafter Weise ist optional vorgesehen, dass die Beleuchtungseinrichtung für jede Leuchtquelle eine zugeordnete Lichtablenkungseinrichtung aufweist. Mit Hilfe einer Lichtablenkungseinrichtung können mit jeder Leuchtquelle zwei oder mehr Beleuchtungsrichtungen bzw. unterschiedliche Beleuchtungssituationen vorgegeben werden. Auf diese Weise ist nicht für jede unterschiedliche Beleuchtungssituation eine zusätzliche Leuchtquelle erforderlich, wodurch die Kosten für die Herstellung und den Betrieb der Vorrichtung reduziert werden können.

Optional ist zudem erfindungsgemäß vorgesehen, dass die Vorrichtung eine Temperatursteuereinrichtung zur Vorgabe einer Betriebstemperatur der Leuchtquellen aufweist, um eine temperaturbedingte Veränderung der spektralen Emissionscharakteristik der einzelnen Leuchtquellen während der Durchführung des erfindungsgemäßen Verfahrens zu minimieren.

Nachfolgend werden einzelne Aspekte der Erfindung näher erläutert, die in der Zeichnung exemplarisch und schematisch dargestellt sind. Es zeigt:
Fig. 1 eine schematische Darstellung einer erfindungsgemäßen Vorrichtung zum Ermitteln einer Höhenprofilanordnung einer Oberfläche eines Objekts mit Hilfe des erfindungsgemäßen Verfahrens, und
Fig. 2 ein schematisches Flussdiagramm mit einzelnen Verfahrensschritten, die während des erfindungsgemäßen Verfahrens durchgeführt werden.

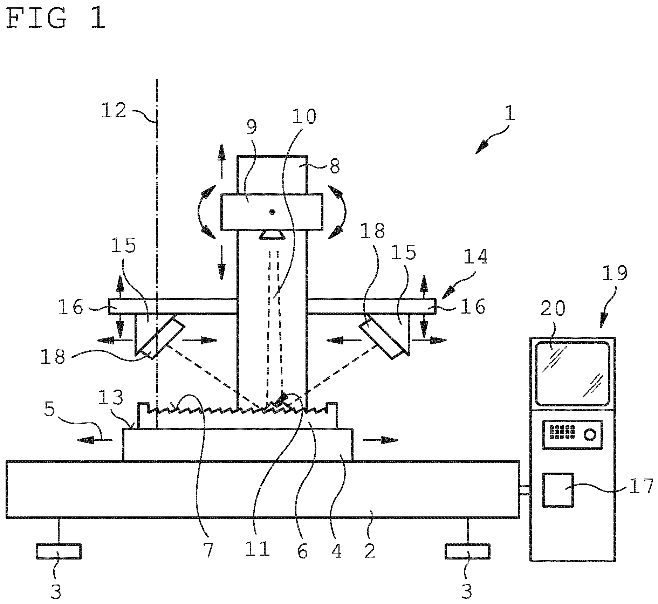

Eine in Figur 1 dargestellte Vorrichtung 1 zum Ermitteln einer Höhenprofilabbildung weist einen Gehäuserahmen 2 auf, der sich über Stützfüße 3 auf einem Untergrund abstützt. Auf dem Gehäuserahmen 2 ist ein Aufnahmetisch 4 angeordnet, der in einer horizontalen Ebene relativ zu dem Gehäuserahmen 2 verlagerbar ist. Der Aufnahmetisch 4 kann beispielsweise über Führungsschienen in einer horizontalen Richtung 5 geführt verlagert werden, oder über einen in zwei horizontalen Richtungen verlagerbaren Verstellmechanismus in der horizontalen Ebene verfahren werden. Auf dem Aufnahmetisch 4 ist ein Objekt 6 mit einer von dem Aufnahmetisch 4 abgewandten Oberfläche 7 angeordnet.

An dem Gehäuserahmen 2 ist ein Tragarm 8 angeordnet. An dem Tragarm 8 ist eine optische Erfassungseinrichtung 9 höhenverstellbar und verschwenkbar angeordnet. Die optische Erfassungseinrichtung 9 kann ein digitaler Zeilenscanner oder eine digitale Kamera sein. Die optische Erfassungseinrichtung 9 ist so angeordnet, dass ein Bilderfassungsbereich 10 der optischen Erfassungseinrichtung 9 einen Ausschnitt 11 der Oberfläche 7 des Objekts 6 erfasst. Durch eine Verlagerung des Aufnahmetischs 4 in der horizontalen Richtung 5 kann der Bilderfassungsbereich 10 über die gesamte Oberfläche 7 hinweg verlagert werden, so dass eine Anzahl nebeneinander angeordneter Ausschnitte 11 der Oberfläche 7 des Objekts 6 erfasst und zu einer vollständigen Abbildung der Oberfläche 7 des Objekts 6 zusammengesetzt werden können.

Durch eine Höhenverstellung der optischen Erfassungseinrichtung 9 an dem Tragarm 8 können die räumlichen Abmessungen des von dem Bilderfassungsbereich 10 erfassten Ausschnitts 11 und damit auch die räumliche Auflösung der eingescannten Ausschnittsabbildungen und damit der daraus zusammengesetzten vollständigen Abbildungen vorgegeben und an die jeweiligen Anforderungen angepasst werden.

Durch ein Verschwenken der optischen Erfassungseinrichtung 9 können stereometrische Abbildungen mit einem unterschiedlichen Blickwinkel der optischen Erfassungseinrichtung 9 relativ zu einer Lotrechten 12 aufgenommen werden, wobei die Lotrechte 12 senkrecht auf einer Oberfläche 13 des Aufnahmetischs 4 aufsteht, auf welcher das Objekt 7 aufliegt.

An dem Tragarm 8 ist ebenfalls höhenverstellbar eine Beleuchtungseinrichtung 14 angeordnet. Die Beleuchtungseinrichtung 14 weist zwei Leuchtmittel 15 auf, die jeweils in der horizontalen Richtung 5 an seitlich auskragenden Beleuchtungsarmen 16 verlagerbar sind. Jedes Leuchtmittel 15 weist eine Gruppe von LEDs mit einer vorgegebenen spektralen Emissionscharakteristik auf. Mit Hilfe einer Temperatursteuereinrichtung 17 kann für die Leuchtmittel 15 eine Betriebstemperatur vorgegeben und für die Dauer des Betriebs der Vorrichtung eingehalten werden.

An jedem Leuchtmittel 15 ist eine zugeordnete Lichtablenkungseinrichtung 18 angeordnet, mit deren Hilfe das von dem Leuchtmittel 15 emittierte Licht in einer durch die Lichtablenkungseinrichtung 18 vorgegebenen Beleuchtungsrichtung auf die Oberfläche 7 des Objekts 6 gerichtet wird. Mit jeder Lichtablenkungseinrichtung 18 können zwei verschiedene Beleuchtungsrichtungen vorgegeben werden, so das mit den zwei Leuchtmitteln 15 und den jeweils zugeordneten Lichtablenkungseinrichtungen 18 vier verschiedene Beleuchtungssituationen erzeugt werden können, in denen jeweils nur ein Leuchtmittel 15 Licht emittiert. Durch eine Kombination beider Leuchtmittel 15 können weitere unterschiedliche Beleuchtungssituationen erzeugt werden, um fotometrische Abbildungen der Oberfläche 7 des Objekts 6 aufzunehmen.

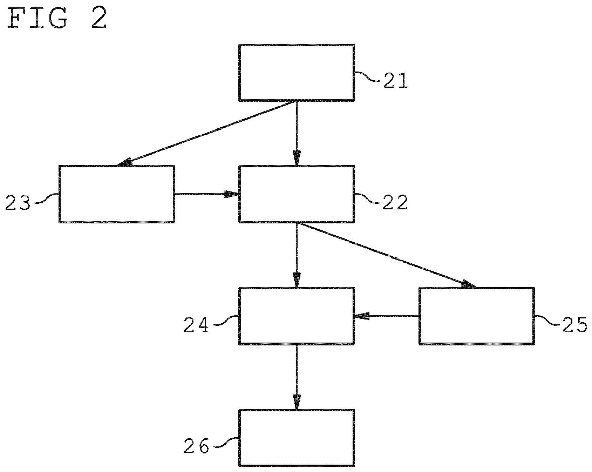

Eine Auswerteeinrichtung 19 ist signalübertragend mit der optischen Erfassungseinrichtung 9 und mit der Beleuchtungseinrichtung 14 verbunden. Mit der Auswerteeinrichtung 19 können auch der Aufnahmetisch 4 verfahren und die Position und Ausrichtung der optischen Erfassungseinrichtung 9 sowie der Beleuchtungseinrichtung 14 vorgegeben werden. Die Auswerteeinrichtung 19 beinhaltet zudem eine Datenverarbeitungseinrichtung, um das nachfolgend näher beschriebene und in Figur 2 schematisch dargestellte erfindungsgemäße Verfahren durchführen zu können. Eine von der Oberfläche 7 des Objekts 6 erzeugte Höhenprofilabbildung kann mit einer Anzeigeeinrichtung 20 der Auswerteeinrichtung 19 angezeigt werden.

Um mit der erfindungsgemäßen Vorrichtung 1 eine Höhenprofilabbildung der Oberfläche 7 des auf dem Aufnahmetisch 4 angeordneten Objekts 6 zu erzeugen werden in einem ersten Aufnahmeschritt 21 zwei stereometrische Abbildungen der Oberfläche 7 des Objekts 6 unter verschiedenen Blickwinkeln aufgenommen. Eine erste stereometrische Abbildung wird unter einem Blickwinkel von 0° relativ zu der Lotrechten 12 aufgenommen. Eine zweite stereometrische Abbildung wird gegebenenfalls auch vorher unter einem Blickwinkel von beispielsweise 15° zur Lotrechten 12 aufgenommen, wobei die optische Erfassungseinrichtung 9 entsprechend verschwenkt und das Objekt 6 mit dem Aufnahmetisch 4 in geeigneter Weise nachgeführt wird.

Durch einen Vergleich der beiden stereometrischen Abbildungen und ausgehend von einem dabei ermittelten Versatz von Abbildungspunkten, die derselben punktförmigen Objektstelle zugeordnet werden, wird in einem Tiefenwertermittlungsschritt 22 für jede vorab vorgegebene punktförmige Objektstelle auf der Oberfläche 7 des Objekts 6 ein Tiefenwert ermittelt. Der Tiefenwert repräsentiert einen Abstand der Oberfläche 7 an der betreffenden Objektstelle von einer horizontalen Bildebene senkrecht zu der Lotrechten 12, die beispielsweise mit der Oberfläche 13 des Aufnahmetischs 4 zusammenfallen kann.

Optional können vor dem Tiefenwertermittlungsschritt 22 in einem Objektstellenauswahlschritt 23 einzelne Objektstellen manuell oder automatisiert ausgewählt werden, für welche nachfolgend in dem Tiefenwertermittlungsschritt 22 jeweils ein Tiefenwert ermittelt wird. Es hat sich gezeigt, dass bereits eine geringe Anzahl von Objektstellen ausreichen kann, um mit den dort ermittelten Tiefenwerten die Genauigkeit der Höhenprofilabbildung erheblich zu verbessern. Der für den Tiefenermittlungsschritt 22 anfallende Aufwand kann dadurch erheblich reduziert werden.

Nachfolgend werden in einem fotometrischen Aufnahmeschritt 24 mehrere fotometrische Abbildungen bei jeweils unterschiedlichen Beleuchtungssituationen aufgenommen.

Gegebenenfalls können vorher in einem optionalen Tiefenwertkontrollschritt 25 die in dem Tiefenwertermittlungsschritt 22 ermittelten Tiefenwerte einer Plausibilitätskontrolle unterzogen und Tiefenwerte, die ein vorgegebenes Plausibilitätskriterium nicht erfüllen, verworfen und für die weitere Auswertung nicht mehr berücksichtigt werden.

In einem fotometrischen Stereoanalyseverfahrensschritt 26 werden ausgehend von den fotometrischen Abbildungen für einzelne Oberflächenbereiche Flächennormale ermittelt und dadurch die jeweilige Ausrichtung der Oberflächenbereiche abgeschätzt. Ausgehend von den Flächennormalen kann dann eine Höhenprofilabbildung erzeugt werden. Erfindungsgemäß wird bei der Ermittlung der Höhenprofilabbildung aus den einzelnen Flächennormalen die Nebenbedingung berücksichtigt, dass eine Differenz eines Höhenprofilabstands als Abstandswert des mit dem fotometrischen Stereoanalyseverfahren ermittelten Höhenprofils zu der Bildebene an den Objektstellen, für welche ein Tiefenwert ermittelt und vorgegeben wurde, minimiert ist. Auf diese Weise können bei Berücksichtigung einer vergleichsweise kleinen Anzahl von Tiefenwerten die ansonsten üblicherweise auftretenden Fehler und Abweichungen der Höhenprofilabbildung von der tatsächlichen Oberfläche 7 des Objekts 6 deutlich reduziert werden, ohne dass ein unverhältnismäßig großer zusätzlicher Aufwand anfällt.

## Patentansprüche

1. Verfahren zum Ermitteln einer Höhenprofilabbildung einer Oberfläche (7) eines Objekts (6), welches auf einem Aufnahmetisch (4) einer Vorrichtung (1) angeordnet ist, die eine optische Erfassungseinrichtung (9) und eine Beleuchtungseinrichtung (14) aufweist, mit welcher die Oberfläche (7) des Objekts (6) aus unterschiedlichen Beleuchtungsrichtungen relativ zu einer Lotrechten (12) beleuchtet werden kann, die senkrecht auf einer Oberfläche (13) des Aufnahmetischs (4) aufsteht, wobei die optische Erfassungseinrichtung (9) und der Aufnahmetisch (4) relativ zueinander verlagerbar sind und die optische Erfassungseinrichtung (9) relativ zu dem Aufnahmetisch (4) verschwenkbar ist, wobei in einem Tiefenwertermittlungsschritt (22) jeweils ein Tiefenwert zu punktförmigen Objektstellen des Objekts (6) als Abstandswert zu einer Bildebene ermittelt wird, die senkrecht zu der Lotrechten (12) ausgerichtet ist, wobei in dem Tiefenwertermittlungsschritt (22) mit der optischen Erfassungseinrichtung (9) mehrere stereometrische Abbildungen der Oberfläche (7) des Objekts (6) unter verschiedenen Blickwinkeln relativ zu der Lotrechten (12) aufgenommen werden, indem die optische Erfassungseinrichtung (9) zur Veränderung des Blickwinkels für die Abbildungen relativ zu dem Objekt (6) verschwenkt wird und das Objekt mit dem verfahrbaren Aufnahmetisch (4) jeweils an einen Bilderfassungsbereich (10) der optischen Erfassungseinrichtung (9) angepasst wird und durch einen Vergleich der mehreren stereometrischen Abbildungen und ausgehend von einem dabei ermittelten Versatz von Abbildungspunkten, die derselben punktförmigen Objektstelle zugeordnet werden, der Tiefenwert für die punktförmige Objektstelle ermittelt wird, wobei in einem fotometrischen Stereoanalyseschritt (26) ausgehend von mehreren verschiedenen fotometrischen Abbildungen der Oberfläche (7) des Objekts (6), die bei Beleuchtung des Objekts (6) mit der Beleuchtungseinrichtung (14) aus jeweils unterschiedlichen Beleuchtungsrichtungen durch die optische Erfassungseinrichtung (9) aufgenommen wurden, mit Hilfe eines erweiterten fotometrischen Stereoanalyseverfahrens eine Höhenprofilabbildung der Oberfläche (7) erzeugt wird, wobei in dem erweiterten Stereoanalyseverfahren die Nebenbedingung berücksichtigt ist, dass eine Differenz eines Höhenprofilabstands als Abstandswert des mit dem fotometrischen Stereoanalyseverfahren ermittelten Höhenprofils zu der Bildebene an den Objektstellen, für welche ein Tiefenwert vorgegeben wurde, minimiert ist.

2. Verfahren nach Anspruch 1, **dadurch gekennzeichnet, dass** in einem Objektstellenauswahlschritt (23) einzelne Objektstellen vorgegeben werden, für welche in dem nachfolgenden Tiefenwertermittlungsschritt (22) jeweils ein Tiefenwert ermittelt wird.

3. Verfahren nach Anspruch 1 oder Anspruch 2, **dadurch gekennzeichnet, dass** in einem Tiefenwertkontrollschritt (25) für die in dem Tiefenwertermittlungsschritt (22) ermittelten Tiefenwerte eine Plausibilitätskontrolle durchgeführt wird und diejenigen Tiefenwerte verworfen werden, die ein vorgegebenes Plausibilitätskriterium nicht erfüllen.

4. Verfahren nach Anspruch 4, **dadurch gekennzeichnet, dass** die Ermittlung der Tiefenwerte für die Objektstellen anhand von zwei stereometrischen Abbildungen durchgeführt wird, wobei eine erste stereometrische Abbildung mit einem Blickwinkel von 0° und eine zweite stereometrische Abbildung mit einem Blickwinkel zwischen 10° und 20° relativ zu der Lotrechten (12) aufgenommen wird.

5. Verfahren nach einem der vorangehenden Ansprüche, **dadurch gekennzeichnet, dass** in oder vor dem fotometrischen Stereoanalyseschritt (26) zwei verschiedene fotometrische Abbildungen aufgenommen werden, indem eine Lichtablenkungseinrichtung (18) die Lichtemission einer Leuchtquelle (15) der Beleuchtungseinrichtung (14) in zwei verschiedene Richtungen relativ zu dem Objekt (6) richtet und für jede der beiden verschiedenen Richtungen der Lichtemission jeweils eine fotometrische Abbildung aufgenommen wird.

6. Verfahren nach einem der vorangehenden Ansprüche, **dadurch gekennzeichnet, dass** der Erfassungsbereich der optischen Erfassungseinrichtung (9) auf einen vorzugsweise streifenförmigen Ausschnitt der Oberfläche (7) des Objekts (6) beschränkt ist und dass durch eine Verlagerung der optischen Erfassungseinrichtung (9) und der Beleuchtungseinrichtung (14) relativ zu der Oberfläche (7) des Objekts (6) die Oberfläche (7) des Objekts (6) vollständig abgescannt wird, wobei durch ein Zusammensetzen der einzelnen eingescannten Ausschnitte eine vollständige Abbildung der Oberfläche (7) des Objekts (6) erzeugt wird.

7. Verfahren nach einem der vorangehenden Ansprüche, **dadurch gekennzeichnet, dass** die Beleuchtungseinrichtung (14) mehrere Leuchtmittel (15) aufweist, für die während der Aufnahme der fotometrischen Abbildungen mit Hilfe einer Temperatursteuereinrichtung (17) eine konstante Betriebstemperatur vorgegeben wird.

8. Vorrichtung (1) zum Ermitteln einer Höhenprofilabbildung einer Oberfläche (7) eines Objekts (6) mit einem Aufnahmetisch (4), auf welchen das Objekt (6) aufgelegt werden kann und mit einer optischen Erfassungseinrichtung (9) zur Aufnahme von Abbildungen von der Oberfläche (7) des Objekts (6), wobei die optische Erfassungseinrichtung (9) und der Aufnahmetisch (4) relativ zueinander verlagerbar sind und die optische Erfassungs-einrichtung (9) relativ zu dem Aufnahmetisch (4) verschwenkbar ist, mit einer Beleuchtungseinrichtung (14), mit welcher die Oberfläche (7) des Objekts (6) aus unterschiedlichen Beleuchtungsrichtungen relativ zu einer Lotrechten (12) beleuchtet werden kann, die senkrecht auf einer Oberfläche (13) des Aufnahmetischs (4) aufsteht, und mit einer Auswerteeinrichtung (19), die zur Durchführung des in den Patentansprüchen 1 bis 7 beschriebenen Verfahrens eingerichtet ist, wobei das Objekt (6) mit dem verfahrbaren Aufnahmetisch (4) so in geeigneter Weise verlagerbar ist, dass es jeweils an einen verschwenkten Erfassungsbereich (10) der optischen Erfassungseinrichtung (9) anpassbar ist

9. Vorrichtung (1) nach Anspruch 8, **dadurch gekennzeichnet, dass** die optische Erfassungseinrichtung (9) relativ zu dem Aufnahmetisch (4) verschwenkbar angeordnet ist.

10. Vorrichtung (1) nach Anspruch 8 oder Anspruch 9, **dadurch gekennzeichnet, dass** die Beleuchtungseinrichtung (14) für jede Leuchtquelle (15) eine zugeordnete Lichtablenkungseinrichtung (18) aufweist.

11. Vorrichtung (1) nach einem der Ansprüche 8 bis 10, **dadurch gekennzeichnet, dass** die Vorrichtung (1) eine Temperatursteuereinrichtung (17) zur Vorgabe einer Betriebstemperatur von den Leuchtquellen (15) der Beleuchtungseinrichtung (14) aufweist.

## Claims

1. Method for ascertaining a height profile image of a surface (7) of an object (6), which is arranged on a receiving table (4) of an apparatus (1), which has an optical detection device (9) and an illumination device (14), with which the surface (7) of the object (6) can be illuminated from different illumination directions relative to a perpendicular (12), which rises vertically on a surface (13) of the receiving table (4), wherein the optical detection device (9) and the receiving table (4) can be displaced relative to one another and the optical detection device (9) can be pivoted relative to the receiving table (4), wherein in a depth value ascertaining step (22) a depth value from punctiform object points of the object (6) is ascertained in each case as a distance value to an image plane oriented at right angles to the perpendicular (12), wherein in the depth value ascertaining step (22), with the optical detection device (9), a plurality of stereometric images of the surface (7) of the object (6) are captured at different viewing angles relative to the perpendicular (12) by pivoting the optical detection device (9) relative to the object (6) to change the viewing angle for the images and adapting the object with the movable receiving table (4) in each case to an image detection range (10) of the optical detection device (9) and by a comparison of the plurality of stereometric images and starting from an offset of imaging points ascertained in this case, which are associated with the same punctiform object point, the depth value for the punctiform object point is determined, wherein in a photometric stereo analysis step (26), starting from a plurality of different photometric images of the surface (7) of the object (6), which were captured by the optical detection device (9) from different illumination directions in each case during illumination of the object (6) by the illumination device (14), a height profile image of the surface (7) is produced using an extended photometric stereo analysis method, wherein in the extended stereo analysis method, the constraint is taken into account that a difference of a height profile distance as a distance value of the height profile ascertained using the photometric stereo analysis method to the image plane at the object points for which a depth value was predetermined, is minimised.

2. Method according to claim 1, **characterised in that** in an object point selection step (23), individual object points are predetermined for which a depth value is ascertained in each case in the following depth value ascertaining step (22).

3. Method according to claim 1 or claim 2, **characterised in that** in a depth value checking step (25), for the depth values ascertained in the depth value ascertaining step (22), a plausibility check is carried out and those depth values that do not satisfy a predetermined plausibility criterion are discarded.

4. Method according to claim 4, **characterised in that** the ascertainment of the depth values for the object points is carried out based on two stereometric images, wherein a first stereometric image is captured at a viewing angle of 0° and a second stereometric image is captured at a viewing angle of between 10° and 20° relative to the perpendicular (12).

5. Method according to any one of the preceding claims, **characterised in that** in or before the photometric stereo analysis step (26), two different photometric images are captured, **in that** a light deflection device (18) directs the light emission of a lighting source (15) of the illumination device (14) in two different directions relative to the object (6) and a photometric image is captured respectively for each of the two different directions of the light emission.

6. Method according to any one of the preceding claims, **characterised in that** the detection range of the optical detection device (9) is restricted to a preferably strip-shaped section of the surface (7) of the object (6) and that by displacement of the optical detection device (9) and the illumination device (14) relative to the surface (7) of the object (6), the surface (7) of the object (6) is scanned completely, wherein a complete image of the surface (7) of the object (6) is produced by assembling the individual scanned sections.

7. Method according to any one of the preceding claims, **characterised in that** the illumination device (14) has a plurality of lighting means (15), for which a constant operating temperature is predetermined using a temperature control device (17) during the capturing of the photometric images.

8. Apparatus (1) for ascertaining a height profile image of a surface (7) of an object (6) with a receiving table (4), on which the object (6) can be placed, and with an optical detection device (9) for capturing images of the surface (7) of the object (6), wherein the optical detection device (9) and the receiving table (4) can be displaced relative to one another and the optical detection device (9) can be pivoted relative to the receiving table (4), with an illumination device (14) with which the surface (7) of the object (6) can be illuminated from different illumination directions relative to a perpendicular (12), which rises vertically on a surface (13) of the receiving table (4), and with an evaluation device (19), which is configured to carry out the method described in claims 1 to 7, wherein the object (6) can be displaced with the movable receiving table (4) in a suitable manner such that it can be adapted in each case to a pivoted detection range (10) of the optical detection device (9).

9. Apparatus (1) according to claim 8, **characterised in that** the optical detection device (9) is arranged pivotably relative to the receiving table (4).

10. Apparatus (1) according to claim 8 or claim 9, **characterised in that** for each lighting source (15), the illumination device (14) has an associated light deflection device (18).

11. Apparatus (1) according to any one of claims 8 to 10, **characterised in that** the apparatus (1) has a temperature control device (17) for predetermining an operating temperature of the lighting sources (15) of the illumination device (14).

## Revendications

1. Procédé pour déterminer une image de profil de hauteur d'une surface (7) d'un objet (6) qui est agencé sur une table d'enregistrement (4) d'un dispositif (1) qui présente un appareil de détection optique (9) et un appareil d'éclairage (14) avec lequel la surface (7) de l'objet (6) peut être éclairée à partir de différentes directions d'éclairage par rapport à une perpendiculaire (12) qui se dresse perpendiculairement sur une surface (13) de la table d'enregistrement (4), l'appareil de détection optique (9) et la table d'enregistrement (4) pouvant être déplacés l'un par rapport à l'autre et l'appareil de détection optique (9) pouvant pivoter par rapport à la table d'enregistrement (4), une valeur de profondeur étant déterminée respectivement dans une étape de détermination de valeurs de profondeur (22) pour des emplacements d'objet ponctuels (6) en tant que valeur de distance par rapport à un plan d'image, qui est orienté perpendiculairement à la perpendiculaire (12), plusieurs images stéréométriques de la surface (7) de l'objet (6) étant enregistrées sous différents angles de vue par rapport à la perpendiculaire (12) dans l'étape de détermination de valeurs de profondeur (22) avec l'appareil de détection optique (9), par le fait que l'appareil de détection optique (9) est amené à pivoter par rapport à l'objet (6) pour modifier l'angle de vue pour les images et l'objet avec la table d'enregistrement mobile (4) est adapté respectivement à une zone de détection d'image (10) de l'appareil de détection optique (9) et par une comparaison des plusieurs images stéréométriques et, en partant d'un décalage de points d'image ainsi déterminé, qui sont attribués au même emplacement d'objet ponctuel, la valeur de profondeur pour l'emplacement d'objet ponctuel est déterminée, dans une étape de stéréo-analyse photométrique (26), en partant de plusieurs images photométriques différentes de la surface (7) de l'objet (6), qui ont été enregistrées par l'appareil de détection optique (9) lors de l'éclairage de l'objet (6) avec l'appareil d'éclairage (14) à partir de directions d'éclairage respectivement différentes, une image de profil de hauteur de la surface (7) est produite à l'aide d'un procédé de stéréo-analyse photométrique étendu, dans le procédé de stéréo-analyse étendu, la condition secondaire étant prise en considération, selon laquelle une différence d'une distance de profil de hauteur en tant que valeur de distance du profil de hauteur déterminé par le procédé de stéréo-analyse photométrique par rapport au plan d'image est minimisée aux emplacements d'objet pour lesquels une valeur de profondeur a été prédéfinie.

2. Procédé selon la revendication 1, **caractérisé en ce que**, dans une étape de sélection d'emplacements d'objet (23), des emplacements d'objet individuels sont prédéfinis, pour lesquels une valeur de profondeur est respectivement déterminée dans l'étape de détermination de valeurs de profondeur (22) suivante.

3. Procédé selon la revendication 1 ou la revendication 2, **caractérisé en ce que**, dans une étape de contrôle de valeurs de profondeur (25), un contrôle de plausibilité est effectué pour les valeurs de profondeur déterminées dans l'étape de détermination de valeurs de profondeur (22) et les valeurs de profondeur qui ne satisfont pas à un critère de plausibilité prédéfini sont rejetées.

4. Procédé selon la revendication 4, **caractérisé en ce que** la détermination des valeurs de profondeur pour les emplacements d'objet est effectuée à l'aide de deux images stéréométriques, une première image stéréométrique étant enregistrée avec un angle de vue de 0° et une deuxième image stéréométrique avec un angle de vue compris entre 10° et 20° par rapport à la perpendiculaire (12).

5. Procédé selon l'une quelconque des revendications précédentes, **caractérisé en ce que**, pendant ou avant l'étape de stéréo-analyse photométrique (26), deux images photométriques différentes sont enregistrées par le fait qu'un appareil de déviation de la lumière (18) dirige l'émission de lumière d'une source lumineuse (15) de l'appareil d'éclairage (14) dans deux directions différentes par rapport à l'objet (6) et une image photométrique est enregistrée respectivement pour chacune des deux directions différentes de l'émission de lumière.

6. Procédé selon l'une quelconque des revendications précédentes, **caractérise en ce que** la zone de détection de l'appareil de détection optique (9) est limitée à une section de préférence en forme de bande de la surface (7) de l'objet (6) et **en ce que**, par un déplacement de l'appareil de détection optique (9) et de l'appareil d'éclairage (14) par rapport à la surface (7) de l'objet (6), la surface (7) de l'objet (6) est scannée entièrement, une image complète de la surface (7) de l'objet (6) étant produite par un assemblage des sections scannées individuelles.

7. Procédé selon l'une quelconque des revendications précédentes, **caractérisé en ce que** l'appareil d'éclairage (14) présente plusieurs moyens d'éclairage (15) pour lesquels une température de fonctionnement constante est prédéfinie pendant l'enregistrement des images photométriques à l'aide d'un appareil de commande de température (17).

8. Dispositif (1) pour déterminer une image de profil de hauteur d'une surface (7) d'un objet (6) avec une table d'enregistrement (4) sur laquelle l'objet (6) peut être placé et avec un appareil de détection optique (9) pour l'enregistrement d'images de la surface (7) de l'objet (6), l'appareil de détection optique (9) et la table d'enregistrement (4) pouvant être déplacés l'un par rapport à l'autre et l'appareil de détection optique (9) pouvant pivoter par rapport à la table d'enregistrement (4), avec un appareil d'éclairage (14), avec lequel la surface (7) de l'objet (6) peut être éclairée à partir de différentes directions d'éclairage par rapport à une perpendiculaire (12) qui se dresse verticalement sur une surface (13) de la table d'enregistrement (4), et avec un appareil d'évaluation (19), qui est conçu pour mettre en œuvre le procédé décrit dans les revendications 1 à 7, l'objet (6) pouvant être déplacé avec la table d'enregistrement mobile (4) de manière appropriée, de telle sorte qu'il peut être adapté respectivement à une zone de détection pivotée (10) de l'appareil de détection optique (9) .

9. Dispositif (1) selon la revendication 8, **caractérisé en ce que** l'appareil de détection optique (9) est agencé de manière pivotante par rapport à la table d'enregistrement (4).

10. Dispositif (1) selon la revendication 8 ou la revendication 9, **caractérisé en ce que** l'appareil d'éclairage (14) présente, pour chaque source lumineuse (15), un appareil de déviation de la lumière associé (18).

11. Dispositif (1) selon l'une quelconque des revendications 8 à 10, **caractérisé en ce que** le dispositif (1) présente un appareil de commande de température (17) pour prédéfinir une température de fonctionnement des sources lumineuses (15) de l'appareil d'éclairage (14).
